# EUROPÄISCHE PATENTSCHRIFT

(11) **EP 0 927 120 B1**
(45) Veröffentlichungstag und Bekanntmachung des Hinweises auf die Patenterteilung: **17.07.2002**
(21) Anmeldenummer: 97942883.6
(22) Anmeldetag: 27.08.1997
(51) Int. Cl.: B60T 8/32, B60T 13/66, B60T 13/74

(54) **BETÄTIGUNGSEINHEIT FÜR EINE ELEKTRONISCH GESTEUERTE FAHRZEUGBREMSANLAGE**
ACTUATION UNIT FOR AN ELECTRONICALLY CONTROLLED VEHICLE BRAKE SYSTEM
UNITE D'ACTIONNEMENT POUR SYSTEME DE FREINAGE DE VEHICULE A COMMANDE ELECTRONIQUE

(30) Priorität: 18.09.1996 DE 19638102
(43) Veröffentlichungstag der Anmeldung: 07.07.1999
(73) Patentinhaber: Lucas Industries Limited, West Midlands B90 4LA (GB); Varity GmbH, 37269 Eschwege (DE)
(72) Erfinder: WÖRSDORFER, Karl-Friedrich, D-55257 Budenheim (DE); POERTZGEN, Gregor, D-56068 Koblenz (DE); KINGSTON, Andrew, D-55262 Heidesheim (DE); WEIGERT, Thomas, D-65812 Bad Soden (DE)
(74) Vertreter: Schmidt, Steffen J., Dipl.-Ing.
(86) Internationale Anmeldenummer: EP9704666
(87) Internationale Veröffentlichungsnummer: WO9812086

(56) Entgegenhaltungen:
- EP-A- 0 360 013
- DE-A- 3 131 856
- DE-A- 4 304 565
- DE-A- 4 343 386

## Beschreibung

Die Erfindung bertrifft eine Betätigungseinheit gemäß dem Oberbegriff des Patentanspruchs 1.

Vorzugsweise wird eine derartige Anordnung für sogenannte Brake-by-Wire-Fahrzeugbremsanlagen verwendet, bei denen eine (hier nicht weiter erläuterte) elektronisch gesteuerte Druckquelle den Hydraulikdruck in den Radbremsen aufbaut, hält und/oder abbaut.

Derartige Fahrzeugbremsanlagen sind zum Beispiel aus der DE 31 24 755 A1 bzw. der DE 31 31 856 A1 bekannt. Allerdings haben diese Anordnung den Nachteil, daß das dem Fahrer dargebotene Bremspedalgefühl und das für den Fahrer erlebbare Verhalten des Bremspedals nur unzureichend dem aus herkömmlichen Fahrzeugbremsanlagen bekannten entspricht.

Die DE-A-43 43 386 zeigt eine Betätigungseinheit für eine hydraulische Fahrzeugbremsanlage mit einer Federanordnung aus einem Elastomer welche eine Alternative für eine Einrichtung zur Simulation des Bremspedalverhaltens darstellt.

Der Erfindung liegt daher die Aufgabe zugrunde, eine Fahrzeugbremsanlage bereitzustellen, die ein für den Fahrer erlebbares Verhalten des Bremspedals bietet, das dem von herkömmlichen Fahrzeugbremsanlage entspricht.

Dazu ist die erfindungsgemäße Fahrzeugbremsanlage mit den Merkmalen des Patentanspruchs 1 ausgestattet.

Dabei kann die Charakteristik-Modelliereinrichtung in der Verbindung zwischen dem Hauptbremszylinder und der Einrichtung zur Simulation des Bremspedalverhaltens angeordnet sein.

Alternativ dazu kann die Charakteristik-Modelliereinrichtung auch in der Verbindung zwischen der Einrichtung zur Simulation des Bremspedalverhaltens und einem Hydraulikreservoir angeordnet sein.

Um in der ersten oben beschriebenen Ausführungsform bei Defekten in der elektronisch gesteuerten Druckquelle.den aus dem Hauptbremszylinder bereitstellbaren Hydraulikdruck nicht unnötig in die Simulationseirichtung zu fördern, kann mit Vorteil in der Verbindung.von dem Hauptbremszylinder zu der Einrichtung zur Simulation des Bremspedalverhaltens eine zweite Ventilanordnung angeordnet sein,durch die in einer Grundstellung die Einrichtung zur Simulation des Bremspedalverhaltens von dem Hauptbremszylinder trennbar oder in einer Betätigungsstellung mit diesem verbindbar ist.

Entsprechendes gilt für die zweite oben beschriebene Alternative, bei der in der Verbindung von der Einrichtung zur Simulation des Bremspedalverhaltens zu dem Reservoir vorzugsweise eine zweite Ventilanordnung angeordnet ist, durch die in einer Grundstellung die Einrichtung zur Simulation des Bremspedalverhaltens von dem Reservoir trennbar oder in einer Betätigungsstellung mit diesem verbindbar ist.

In einer derzeit bevorzugten Ausführungsform der Erfindung. ist die Einrichtung zur Simulation des Bremspedalverhaltens durch eine Zylinder/Kolbenanordnung gebildet, bei der ein Kolben durch die Federanordnung belastet ist, die durch eine Schrauben- oder Tellerfederpaket-Anordnung mit vorzugsweise progressiver Federkennlinie gebildet ist. Alternativ dazu kann die Federanordnung auch durch ein Elastomer-Element gebildet sein, wie es als solches durch die DE 43 43 386 A1 bekannt ist.

In einer weiteren Ausführungsform der Erfindung ist zu der bei der Betätigung des Bremspedals Hydraulikfluid durchlassenden ersten Drossel eine dritte Drossel parallel geschaltet, der vorzugsweise ein druckgesteuertes Differenzdruckventil vor- oder nachgeschaltet ist.

Weitere Vorteile, Merkmale und Eigenschaften der Erfindung ergeben sich aus der nachfolgenden Beschreibung der Zeichnung.

Fig. 1 zeigt eine erste Ausführungsform einer erfindungsgemäßen Betätigungseinheit für eine elektronisch gesteuerte Fahrzeugbremsanlage in einer schematischen Darstellung.

Fig. 2 zeigt eine erste Abwandlung der der Einrichtung zur Simulation des Bremspedalverhaltens aus Fig. 1 zugeordneten Charakteristik-Modelliereinrichtung.

Fig. 3 zeigt eine zweite Abwandlung der der Einrichtung zur Simulation des Bremspedalverhaltens aus Fig. 1 zugeordneten Charakteristik-Modelliereinrichtung.

Fig. 4 zeigt eine zweite Ausführungsform einer erfindungsgemäßen Betätigungseinheit für eine elektronisch gesteuerte Fahrzeugbremsanlage in einer schematischen Darstellung.

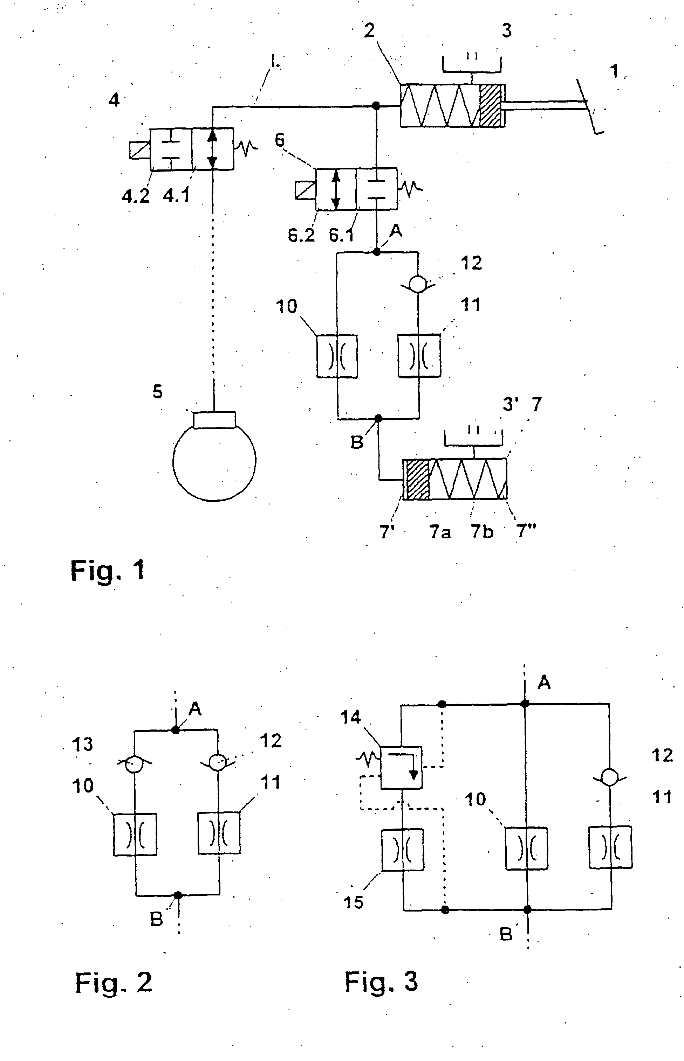

In Fig. 1 ist eine erfindungsgemäße Betätigungseinheit für ein elektronisch gesteuertes Bremssystem schematisch dargestellt. Die Betätigungseinheit umfaßt einen Hauptbremszylinder 2, der über ein Bremspedal 1 betätigbar ist. Von dem Hauptbremszylinder 2 geht ein Bremskreis I aus, um eine Radbremse 5 mit Hydraulikfluid aus einem Reservoir 3 zu versorgen. Üblicherweise werden von dem Hauptbremszylinder 2 zwei Bremskreise mit jeweils zwei Radbremsen angesteuert. Der Übersichtlichkeit halber ist jedoch nur ein Bremskreis mit einer Radbremse 5 dargestellt. Zwischen dem Hauptbremszylinder 1 und der Radbremse 5 ist eine erste Ventileinrichtung 4 angeordnet, die die Verbindung zwischen dem Hauptbremszylinder 2 und der Radbremse 5 federunterstützt öffnet (Grundstellung) und elektromagnetbetätigt sperrt (Betätigungsstellung).

Bei fehlerfreiem elektronisch gesteuertem Bremssystem nimmt die erste Ventileinrichtung 4 ihre Betätigungsstellung ein, so daß die Versorgung der Radbremse 5 mit Hydraulikfluid durch eine nicht näher dargestellte elektronisch gesteuerte Druckquelle erfolgt. Tritt dagegen in dem elektronisch gesteuerten System ein Fehler, beispielsweise durch eine zu geringe Versorgungsspannung, auf, so geht die erste Ventilanordnung 4 in ihre Grundstellung zurück, damit eine Notbetätigung der Radbremse 5 durchführbar ist.

Parallel zu der ersten Ventilanordnung 4 und der Radbremse 5 ist der Ausgang des Hauptbremszylinders 2 an eine Simulationseinrichtung 7 angeschlossen. Die Simulationseinrichtung 7 dient dazu, wenn sich die erste Ventileinrichtung 4 in ihrer Betätigungsstellung befindet, also die Versorgung der Radbremse 5 mit Hydraulikfluid durch die nicht näher dargestellte elektronisch gesteuerte Druckquelle erfolgt, dem Fahrer bei Betätigung des Bremspedals 1 die bei einer konventionellen Bremsanlage übliche Pedalcharakteristik zu vermitteln.

In der Verbindung zwischen dem Ausgang des Hauptbremszylinders 2 und der Simulationseinrichtung 7 ist eine zweite Ventileinrichtung 6 angeordnet, die die Verbindung zwischen dem Hauptbremszylinder 2 und der Simulationseinrichtung 7 federunterstützt sperrt (Grundstellung) und elektromagnetbetätigt öffnet (Betätigungsstellung). Damit ist es möglich, während der Durchführung einer Notbetätigung der Radbremse 5 die Verbindung des Hauptbremszylinders 2 zu der Simulationseinrichtung 7 zu sperren, so daß kein Hydraulikfluidvolumen in die Simulationseinrichtung 7 entweichen kann. Die zweite Ventilanordnung 6 geht dann in ihre Grundstellung über, wenn sich auch die erste Ventileinrichtung 4 in ihrer Grundstellung befindet, also ein Fehler (zum Beispiel Spannungsrückgang) in dem elektronisch gesteuerten System auf getreten ist.

Die Simulationseinrichtung 7 hat einen Kolben 7a, der einen Zylinder in zwei Druckräume 7', 7" unterteilt. Der eine Druckraum 7" ist mit dem Reservoir 3' für Hydraulikfluid verbunden. Dieses Reservoir 3' kann mit dem Reservoir 3 des Hauptbremszylinders 2 identisch oder mit ihm hydraulisch verbunden sein. Der andere Druckraum 7' ist über eine Charakteristik-Modelliereinrichtung zwischen den Punkten A und B sowie die (in ihrer Betätigungsstellung befindliche) zweite Ventilanordnung 6 mit dem Hauptbremszylinder 2 verbunden, um den Kolben 7a gegen die Wirkung eines Federelements 7b mit Druck zu beaufschlagen. Vorzugsweise weist das Federelement 7b eine progressive Federkennlinie auf, um die Pedalcharakteristik möglichst genau zu simulieren.

Das Federelement 7b kann in herkömmlicher Weise als Schraubenfeder oder als Tellerfederpaket ausgebildet werden. Jedoch ist es auch möglich, das Federelement 7b als Elastomer-Element auszubilden, wodurch sich nicht unerhebliche Kostenvorteile ergeben, da anders als bei Verwendung einer Schraubenfeder Befestigungs- sowie Anschlagteile direkt in das Elastomer-Element integriert werden können. Auch wird der bei der Verwendung einer Schraubenfeder erforderliche Aufwand zur Führung sowie Einstellung der Vorspannkraft der Schraubenfeder eingespart. Vorteilhaft erweist sich weiterhin, daß ein Elastomer-Element gegenüber einer Schraubenfeder stärker ausgeprägte Dämpfungseigenschaften aufweist. Die vorteilhaften Eigenschaften des Elastomer-Elements lassen sich durch geeignete Formgebung, Kapselung sowie Materialauswahl erzielen.

Um die Simulation der Pedalcharakteristik durch hydraulische Dämpfung weiter zu formen und damit zu optimieren, sind in der Verbindung zwischen dem Hauptbremszylinder 2 und der Simulationseinrichtung 7 eine erste und eine zweite Drossel 10, 11 angeordnet. Die Drosseln 10, 11 sind zwischen den Punkten A, B angeordnet und zueinander parallel geschaltet, wobei zu der zweiten Drossel 11 ein Sperrventil 12 in Reihe geschaltet ist. Das Sperrventil 12 ist so ausgerichtet, daß eine Strömungsverbindung nur in Richtung von der Simulationseinrichtung 7 zu dem Hauptbremszylinder 2 möglich ist. Demzufolge strömt bei einer Betätigung des Bremspedals 1 Hydraulikfluid von dem Hauptbremszylinder 2 über die erste Drossel 10 in die Simulationseinrichtung 7, während bei einer Zurücknahme der Betätigung des Bremspedals 1 Hydraulikfluid von der Simulationseinrichtung 7 über beide Drosseln 10, 11 in den Hauptbremszylinder 2 zurückströmt.

Erfindungsgemäß stellt sich damit bei Betätigung des Bremspedals 1 und bei Zurücknahme der Betätigung des Bremspedals 1 jeweils eine unterschiedliche Dämpfungs- und damit Pedalcharakteristik ein.

Die Drosseln 10, 11 sind so bemessen oder einstellbar, daß sich bei Betätigung des Bremspedals 1 eine stärker gedämpfte Pedalcharakteristik als bei Zurücknahme der Betätigung des Bremspedals 1 ergibt. Die Bemessung der Drosseln 10, 11 kann in üblicher Weise durch Einstellung der Strömungsquerschnitte erfolgen. Damit sich bei Betätigung eine stärkere Bedämpfung als bei Zurücknahme der Betätigung des Bremspedals 1 ergibt, sind entweder die Strömungsquerschnitte der Drosseln 10, 11 jeweils gleich groß oder der Strömungsquerschnitt der mit dem Sperrventil 12 in Reihe geschalteten zweiten Drossel 11 ist größer als der Strömungsquerschnitt der ersten Drossel 10 einzustellen.

Sofern bereits,das Federelement 7b der Simulationseinrichtung 7 eine ausreichende Bedämpfung bewirkt, was insbesondere bei der Verwendung von einem Elastomer-Element als Federelement 7b der Fall ist, kann das mit dem Sperrventil 12 in Reihe geschaltete Drosselventil 11 eingespart werden.

Bei der Ausführungsform nach Fig. 2 ist gegenüber der Ausführungsform nach Fig. 1 zusätzlich auch der ersten Drossel 10 ein Sperrventil 13 in Reihe geschaltet, wobei das Sperrventil 13 so ausgerichtet ist, daß eine Strömungsverbindung nur in Richtung von dem Hauptbremszylinder 2 zu dem Druckraum 7' der Simulationseinrichtung 7 möglich ist. Demzufolge strömt bei einer Betätigung des Bremspedals 1 Hydraulikfluid von dem Hauptbremszylinder 2 über die erste Drossel 10 in die Simulatioriseinrichtung 7. Bei einer Zurücknahme der Betätigung des Bremspedals 1 strömt Hydraulikfluid von dem ersten Druckraum 7' der Simulationseinrichtung 7 über die zweite Drossel 11 in den Hauptbremszylinder 2 zurück. Hierbei ist der Strömungsquerschnitt der mit dem Sperrventil 12 in Reihe geschalteten zweiten Drossel 11 größer als der Strömungsquerschnitt der mit dem Sperrventil 13 in Reihe geschalteten ersten Drossel 10 eingestellt. Damit wird erreicht, daß sich bei Betätigung des Bremspedals 1 eine stärkere Bedämpfung als bei Zurücknahme der Betätigung des Bremspedals 1 ergibt.

Bei der Ausführungsform nach Fig. 3 ist gegenüber der Ausführungsform nach Fig. 1 den Drosseln 10, 11 eine weitere Drossel 15 parallel geschaltet, wobei dieser dritten Drossel 15 ein Differenzdruckventil 14 mit geschlossener Grundstellung in Reihe geschaltet ist. Hierbei strömt bei einer Betätigung des Bremspedals 1 Hydraulikfluid von dem Hauptbremszylinder 2 über die Drossel 10 in die Simulationseinrichtung 7. Sobald die Druckdifferenz zwischen dem Hauptbremszylinder 2 und der Simulationseinrichtung 7 eine voreingestellte Öffnungsdruckdifferenz überschreitet, strömt die Hydraulikfluid von dem Hauptbremszylinder 2 über die zweite und dritte Drossel 10, 15 in die Simulationseinrichtung 7. Wird die Betätigung des Bremspedals 1 zurückgenommen, so strömt Hydraulikfluid von der Simulationseinrichtung 7 über die erste und zweite Drossel 10, 11 in den Hauptbremszylinder 2 zurück.

Da die Druckdifferenz zwischen dem Hauptbremszylinder 2 und der Simulationseinrichtung 7 mit der auf das Bremspedal 1 ausgeübten Betätigungskraft in Beziehung steht, erfolgt hierbei die Einstellung der Dämpfungscharakteristik in Abhängigkeit von der Betätigungskraft. Die Druckdifferenz zwischen dem Hauptbremszylinder 2 und der Simulationseinrichtung 7 hängt bei in seiner geschlossenen Grundstellung befindlichem Differenzdruckventil 14 von dem Volumenstrom durch die erste Drossel 10 ab. Außerdem steht der Volumenstrom mit der Betätigungsgeschwindigkeit des Bremspedal 1 in Beziehung. Daher ist die Einstellung der Dämpfungscharakteristik auch von der Betätigungsgeschwindigkeit abhängig. Insgesamt läßt sich somit die Dämpfungscharakteristik bei Betätigung des Bremspedals 1 durch Einstellung der Öffnungsdruckdifferenz des Differenzdruckventils 14 sowie durch Bemessung des Strömungsquerschnittes der ersten Drossel 10 in Abhängigkeit von der Betätigungskraft sowie der Betätigungsgeschwindigkeit des Bremspedals 1 zu exakten Simulation der Pedalcharakteristik einstellen.

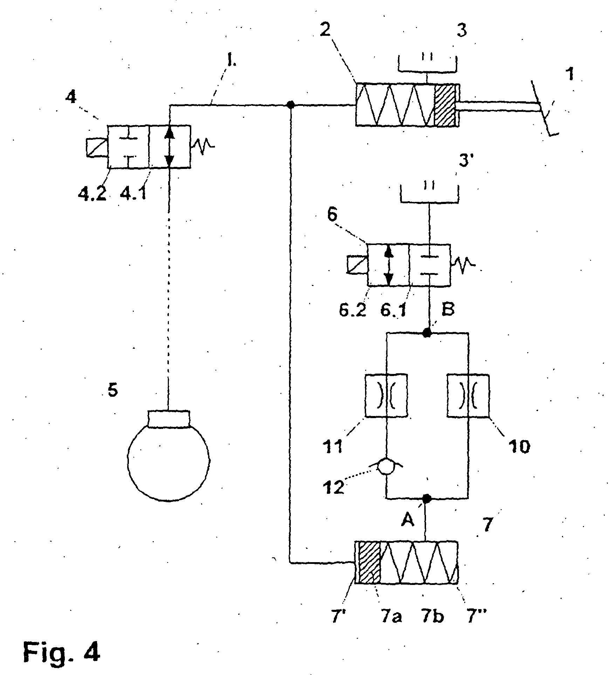

Die in Fig. 4 gezeigt Ausführungsform unterscheidet sich von der Ausführungsform gemäß Fig. 1 darin, daß die Charakteristik-Modelliereinrichtung nicht mit dem mit dem Hauptbremszylinder 2 verbundenen ersten Druckraum 7', sondern in der Verbindung zwischen dem Reservoir 3' und dem zweiten Druckraum 7" angeordnet ist. Dabei ist die Orientierung der Punkte A und B vertauscht, um der Richtungsgebundenheit der Ventile 12, 13, 14 Rechnung zu tragen. In der Fig. 4 ist auch die zweite Ventilanordnung 6 in dieser Verbindung zwischen dem Reservoir 3' und dem zweiten Druckraum 7" angeordnet. Alternativ dazu kann die ventilanordnung 6 jedoch auch zwischen dem Hauptbremszylinder 2 und dem ersten Druckraum 7' verbleiben. In der erfindungsgemäß erzielten Funktion ändert sich dadurch nichts.

## Patentansprüche

1. Betätigungseinheit für eine elektronisch gesteuerte hydraulische Fahrzeugbremsanlage, mit
- einem durch ein Bremspedal (1) betätigbaren Bremskraftverstärker, der einen Hauptbremszylinder (2) und ein Reservoir (3) für Hydraulikfluid aufweist,
- einer mit wenigstens einem ersten Fahrzeugrad gekoppelten ersten Bremseinrichtung (5), die durch eine elektronisch gesteuerte erste Ventilanordnung (4) in einer Grundstellung (4.1) mit dem Hauptbremszylinder (2) verbindbar oder in einer Betätigungsstellung (4.2) von diesem trennbar ist,
- einer mit dem Hauptbremszylinder (2) verbindbaren Einrichtung zur Simulation des Bremspedalverhaltens (7), die
-- eine zur Wirkung gegen den Hydraulikdruck aus dem Hauptbremszylinder (2) eingerichtete Federanordnung (7b) aufweist, **dadurch gekennzeichnet, daß** der Simulationseinrichtung (7) eine Charakteristik-Modelliereinrichtung (A ... B) zugeordnet ist,
- die das Verhalten der Simulationseinrichtung (7) in Abhängigkeit von der Bewegungsrichtung, der Betätigungskraft und der Betätigungsgeschwindigkeit des Bremspedals (1) beeinflußt, und
- die wenigstens eine bei der Betätigung des Bremspedals (1) Hydraulikfluid durchlassende erste Drossel (10) und eine bei einer Zurücknahme der Betätigung des Bremspedals (1) Hydraulikfluid durchlassende zweite Drossel (11) aufweist.

2. Betätigungseinheit nach Anspruch 1, bei der
- die Charakteristik-Modelliereinrichtung (A ... B) in der Verbindung zwischen dem Hauptbremszylinder (2) und der Einrichtung zur Simulation des Bremspedalverhaltens (7) angeordnet ist.

3. Betätigungseinheit nach Anspruch 1, bei der
- die Charakteristik-Modelliereinrichtung (A ... B) in der Verbindung zwischen der Einrichtung zur Simulation des Bremspedalverhaltens (7) und einem Hydraulikreservoir (3, 3') angeordnet ist.

4. Betätigungseinheit nach Anspruch 2, bei der
- in der Verbindung von dem Hauptbremszylinder (2) zu der Einrichtung zur Simulation des Bremspedalverhaltens (7) eine zweite Ventilanordnung (6) angeordnet ist, durch die in einer Grundstellung (6.1) die Einrichtung zur Simulation des Bremspedalverhaltens (7) von dem Hauptbremszylinder (2) .trennbar oder in einer Betätigungsstellung (6.2) mit diesem verbindbar ist.

5. Betätigungseinheit nach Anspruch 3, bei der
- in der Verbindung von der Einrichtung zur Simulation des Bremspedalverhaltens (7) zu dem Reservoir (3, 3') eine zweite Ventilanordnung (6) angeordnet ist, durch die in einer Grundstellung (6.1) die Einrichtung zur Simulation des Bremspedalverhaltens (7) von dem Reservoir (3, 3') trennbar oder in einer Betätigungsstellung (6.2) mit diesem verbindbär ist.

6. Betätigungseinheit nach einem der vorhergehenden Ansprüche, bei der
- die Einrichtung zur Simulation des Bremspedalverhaltens (7) durch eine Zylinder/Kolbenanordnung gebildet ist, bei der ein Kolben (7a) durch die Federanordnung (7b) belastet ist, und
- die Federanordnung (7b) durch eine Schrauben- oder Tellerfederpaket-Anordnung mit vorzugsweise progressiver Federkennlinie gebildet ist.

7. Betätigungseinheit nach einem der vorhergehenden Ansprüche, bei der
- die Federanordnung (7b) durch ein Elastomer-Element gebildet ist.

8. Betätigungseinheit nach einem der vorhergehenden Ansprüche, bei der
- der ersten und/oder der zweiten Drossel (10, 11) jeweils ein Sperrventil (13, 12) vor- oder nachgeschaltet ist.

9. Betätigungseinheit nach einem der vorhergehenden Ansprüche, bei der
- zu der bei der Betätigung des Bremspedals (1) Hydraulikfluid durchlassenden ersten Drossel (10) eine dritte Drossel (15) parallel geschaltet ist, der vorzugsweise eine druckgesteuertes Differenzdruckventil (14) vor- oder nachgeschaltet ist.

## Claims

1. An actuation unit for an electronically controlled hydraulic vehicle braking system, comprising
- a brake booster which is adapted to be actuated by a brake pedal (1) and comprises a master cylinder (2) and a reservoir (3) for hydraulic fluid,
- a first brake means (5) which is coupled with at least one first vehicle wheel and which is connectable with the master cylinder (2) via an electronically controlled valve arrangement (4) in a basic position (4.1) or is disconnectable from same in an actuation position (4.2),
- a means for simulating the brake pedal behaviour (7) which is connectable with the master cylinder (2) and
-- comprises a spring arrangement (7b) adapted to act against the hydraulic pressure from the master cylinder (2),
**characterised in that**
- a characteristics modelling means (A ... B) is associated with the simulating means (7),
- which influences the behaviour of the simulation means (7) as a function of the direction of movement, the actuation force and the actuation speed of the brake pedal (1), and
- which comprises at least one first throttle (10) allowing the passage of hydraulic fluid upon actuation of the brake pedal (1) and a second throttle (11) allowing the passage of hydraulic fluid upon release of the actuation of the brake pedal (1).

2. The actuation unit according to Claim 1, wherein
- the characteristics modelling means (A ... B) is arranged in the connection between the master cylinder (2) and the means for simulating the brake pedal behaviour (7).

3. The actuation unit according to Claim 1, wherein
- the characteristics modelling means (A ... B) is arranged in the connection between the means for simulating the brake pedal behaviour (7) and a hydraulic reservoir (3, 3').

4. The actuation unit according to Claim 2, wherein
- a second valve arrangement (6) is arranged in the connection from the master cylinder (2) to the means for simulating the brake pedal behaviour (7), by means of which, in a basic position (6.1), the means for simulating the brake pedal behaviour (7) can be disconnected from the master cylinder (2) or, in an actuation position (6.2), can be connected with same.

5. The actuation unit according to Claim 3, wherein
- a second valve arrangement (6) is arranged in the connection from the means for simulating the brake pedal behaviour (7) to the reservoir (3, 3'), by means of which, in a basic position (6.1), the means for simulating the brake pedal behaviour (7) can be disconnected from the reservoir (3, 3') or, in an actuation position (6.2), can be connected with same.

6. The actuation unit according to one of the previous claims, wherein
- the means for simulating the brake pedal behaviour (7) is formed by a cylinder/piston arrangement wherein a piston (7a) is loaded by the spring arrangement (7b), and
- the spring arrangement (7b) is formed by a helical spring or diaphragm spring pack arrangement with preferably progressive spring characteristic.

7. The actuation unit according to one of the previous claims, wherein
- the spring arrangement (7b) is formed by an elastomeric element.

8. The actuation unit according to one of the previous claims, wherein
- a shut-off valve (13, 12) each is arranged upstream or downstream of the first and/or the second throttle (10, 11).

9. The actuation unit according to one of the previous claims, wherein
- a third throttle (15) is connected in parallel with the first throttle (10) allowing the passage of hydraulic fluid upon actuation of the brake pedal (1), with preferably a pressure-controlled differential pressure valve (14) being arranged upstream or downstream of the third throttle (10).

## Revendications

1. Unité d'actionnement pour une installation hydraulique de freinage de véhicule automobile, commandée électroniquement, comportant
- un amplificateur de la force de freinage, pouvant être actionné par une pédale de frein (1), et présentant un cylindre de frein principal (2) et un réservoir (3) pour fluide hydraulique,
- un premier dispositif de freinage (5) couplé à au moins une première roue de véhicule, et pouvant être relié, dans une position initiale (4.1), au cylindre principal de frein (2) par un premier dispositif de soupape (4) commandé électroniquement, ou pouvant être séparé de celui-ci dans une position d'actionnement (4.2),
- un dispositif (7) de simulation du comportement de la pédale de frein (1), qui peut être relié au cylindre principal de frein (2) et qui présente
-- un dispositif de ressort (7b) installé pour agir contre la pression hydraulique provenant du cylindre principal de frein (2),
**caractérisé en ce qu'**au dispositif de simulation (7), est associé un dispositif de modélisation de caractéristiques (A...B),
- qui agit sur le comportement du dispositif de simulation (7) en fonction du sens de déplacement, de la force d'actionnement et de la vitesse d'actionnement de la pédale de frein (1), et
- qui présente au moins un premier organe d'étranglement (10) laissant passer du fluide hydraulique lors de l'actionnement de la pédale de frein (1) et un deuxième organe d'étranglement (11) laissant passer du fluide hydraulique en cas d'un retour de l'actionnement de la pédale de frein (1).

2. Unité d'actionnement suivant la revendication 1, dont le dispositif de modélisation de caractéristiques (A...B) est disposé dans la liaison entre le cylindre principal de frein (2) et le dispositif (7) de simulation du comportement de la pédale de frein.

3. Unité d'actionnement suivant la revendication 1, dont
- le dispositif de modélisation de caractéristiques (A...B) est disposé dans la liaison entre le dispositif (7) de simulation du comportement de la pédale de frein et un réservoir hydraulique (3, 3').

4. Unité d'actionnement suivant la revendication 2, dans laquelle
- dans la liaison du cylindre principal de frein (2) vers le dispositif (7) de simulation du comportement de la pédale de frein, est disposé un deuxième dispositif de soupape (6), par lequel, dans une position initiale (6.1), le dispositif (7) de simulation du comportement de la pédale de frein, peut être coupé du cylindre principal de frein (2), ou, dans une position d'actionnement (6.2), peut être relié à celui-ci.

5. Unité d'actionnement suivant la revendication 3, dans laquelle
- dans la liaison reliant le dispositif (7) de simulation du comportement de la pédale de frein au réservoir (3, 3'), est disposé un deuxième dispositif de soupape (6), par lequel, dans une position initiale (6.1), le dispositif (7) destiné à la simulation du comportement de la pédale de frein, peut être coupé du réservoir (3, 3'), ou, dans une position d'actionnement (6.2), peut être relié à celui-ci.

6. Unité d'actionnement suivant l'une des revendications précédentes, dont
- le dispositif (7) de simulation du comportement de la pédale de frein, est réalisé par un dispositif piston-cylindre, dont un piston (7a) est soumis à l'action du dispositif de ressort (7b), et
- dont le dispositif de ressort (7b) est réalisé par un agencement constitué d'un paquet de ressorts à boudin ou de ressorts à disques comportant, de préférence, une courbe caractéristique élastique progressive.

7. Unité d'actionnement suivant l'une des revendications précédentes, dont
- le dispositif de ressort (7b) est réalisé par un élément en élastomère.

8. Unité d'actionnement suivant l'une des revendications précédentes, dans laquelle
- un clapet anti-retour (13, 12) est branché respectivement en amont ou en aval du premier et/ou du deuxième organe d'étranglement (10, 11).

9. Unité d'actionnement suivant l'une des revendications précédentes, dans laquelle un troisième organe d'étranglement (15) est branché parallèlement au premier organe d'étranglement (10) laissant passer du fluide hydraulique lors de l'actionnement de la pédale de frein (1), une soupape de pression différentielle (14), commandé par la pression, étant avantageusement branché en amont ou en aval du troisième organe d'étranglement (15).
